# EUROPÄISCHE PATENTSCHRIFT

(11) **EP 3 468 777 B1**
(45) Veröffentlichungstag und Bekanntmachung des Hinweises auf die Patenterteilung: **13.03.2024**
(21) Anmeldenummer: 17723064.6
(22) Anmeldetag: 10.05.2017
(51) Int. Cl.: B29C 65/00, B29C 65/02, B62D 29/04

(54) **FASERVERSTÄRKTES KUNSTSTOFFBAUTEIL UND VERFAHREN ZU DESSEN HERSTELLUNG**
FIBER-REINFORCED PLASTIC COMPONENT AND METHOD FOR PRODUCING SAME
ÉLÉMENT EN PLASTIQUE RENFORCÉ DE FIBRES ET SON PROCÉDÉ DE FABRICATION

(30) Priorität: 08.06.2016 DE 102016210095
(43) Veröffentlichungstag der Anmeldung: 17.04.2019
(73) Patentinhaber: Bayerische Motoren Werke Aktiengesellschaft, 80809 München (DE)
(72) Erfinder: HOGGER, Thomas, 83624 Otterfing (DE)
(86) Internationale Anmeldenummer: PCT/EP2017/061107
(87) Internationale Veröffentlichungsnummer: WO 2017/211528

(56) Entgegenhaltungen:
- EP-A1- 1 849 588
- WO-A1-2014/189946
- DE-A1-102013 218 520
- US-A1- 2008 072 527

## Beschreibung

Die Erfindung betrifft ein faserverstärktes Kunststoffbauteil sowie ein Verfahren zu dessen Herstellung.

Faserverstärkte Kunststoffbauteile werden seit vielen Jahren in verschiedenen Bereichen der Technik, u.a. auch intensiv im Automobilbau eingesetzt. Sie besitzen ein hohes Leichtbaupotenzial und können im Vergleich zu anderen Werkstoffen, wie beispielsweise Metallen oder unverstärkten Kunststoffen, durch die eingearbeiteten Fasern hohe Zugkräfte aufnehmen. Dabei sind die gewichtsspezifischen Vorteile von faserverstärkten Kunststoffen am besten nutzbar, wenn die Fasern im Matrixmaterial lastpfadgerecht ausgelegt sind, was eine belastungsgerechte Konstruktion des Werkstoffs voraussetzt.

Verstärkungsfaserstäbe werden in der Technik von Faserverbundbauteilen eingesetzt und unterscheiden sich von Faserlagen oder Fasergeweben dadurch, dass sie durch eine Vielzahl von in einer Richtung durchgehenden Fasern geformt sind, d. h. durch die Fasern in eine vorbestimmte Stabform gebracht sind. Als Stabquerschnittsform werden hierbei zumeist runde, viereckige oder sechseckige Stäbe mit einem Höhen-Breitenverhältnis von größer oder gleich 1/10 verwendet. Bei geringeren Höhen-Breitenverhältnissen handelt es sich nicht um einen geformten Faserstab, sondern um Arten von Gelege.

Für die Verwendung von Faserstäben zeigte sich auch eine Verwendung in einer Skelettbauweise mit anschließender Spritzgussbearbeitung zur Bauteilfertigung als vorteilhaft, jedoch sind die Investitionskosten für die Werkzeuge zur Herstellung derartiger Bauteile vergleichsweise hoch.

Ein faserverstärktes Kunststoffbauteil, welches aus mehreren Komponenten gebildet ist, sowie ein zugehöriges Herstellungsverfahren sind beispielsweise aus der WO 2014/189946 A1 oder der US 2008/072527 A1 bekannt. Weiter sind faserverstärkte Kunststoffbauteile mit Verstärkungsfaserstaben aus den Dokumenten DE 10 2013 218 520 A1 und EP 1 849 588 A1 bekannt.

Der Erfindung liegt deshalb die Aufgabe zugrunde, faserverstärkte Kunststoffbauteile sowie ein Verfahren zu deren Herstellung bereit zu stellen, bei denen die positive Wirkung der Verstärkungsfaserstäbe kostengünstiger nutzbar sind.

Diese Aufgabe wird durch die Merkmalskombination gemäß der Patentansprüche 1, 7 und 8 gelöst.

Erfindungsgemäß wird ein faserverstärktes Kunststoffbauteil gemäß Anspruch 1 vorgeschlagen. Das faserverstärkte Kunststoffbauteil weist einen dreidimensionalen Bauteilkunststoffkörper, der zumindest Teile einer Form des Kunststoffbauteils bestimmt, und mindestens einen Verstärkungsfaserstab auf. Der Bauteilkunststoffkörper weist hierbei mindestens einen nach zumindest einer Seite offenen Freiraum auf, in den der mindestens eine Verstärkungsfaserstab eingelegt ist.

Als Verstärkungsstäbe kommen insbesondere Kohlefaserstäbe mit einer Kunststoffmatrix zur Anwendung. Der Bauteilkunststoffkörper bildet zumindest einen Teil der Endform des zu fertigenden faserverstärkten Kunststoffbauteils ab.

Als kostengünstige Ausführung hat sich als positiv erwiesen, den Bauteilkunststoffkörper in einem generativen bzw. additiven Fertigungsverfahren (im englischen "Additive Manufacturing") herzustellen. Die Fertigung erfolgt dabei direkt auf der Basis der rechnerinternen Datenmodelle aus formlosem, zumeist flüssigem oder pulvrigem Material mittels chemischer und/oder physikalischer Prozesse. Dabei kommt erfindungsgemäß insbesondere das selektive Lasersintern zur Erzeugung der dreidimensionalen Form zum Einsatz. Als Materialien eignen sich für den Bauteilkunststoffkörper beispielsweise Polyamid 6 oder Polyamid 12.

In einem Ausführungsbeispiel ist für das faserverstärkte Kunststoffbauteil vorgesehen, dass der mindestens eine Freiraum durch eine wannenförmige oder nutenförmige Vertiefung ausgebildet ist. Derartige Vertiefungen eignen sich besonders zum Einlegen der Verstärkungsfaserstäbe. Zudem können sie entsprechend der Abmaße der Verstärkungsfaserstäbe dimensioniert werden, so dass die Verstärkungsfaserstäbe die Freiräume vollständig oder im Wesentlichen vollständig ausfüllen. Alternativ ist aber auch möglich, den Freiraum zu zwei Seiten offen auszubilden. Dann wird der eingelegte Verstärkungsfaserstab in dem Freiraum beispielsweise über ein Werkzeug gehalten, bis der Verstärkungsstab an dem Bauteilkunststoffkörper fixiert ist. Im fertigen Bauteil ist der Verstärkungsstab dann zweiseitig zugänglich.

Der Bauteilkunststoffkörper kann die Außenform des faserverstärkten Kunststoffbauteils alleine oder zusammen mit weiteren Bauteilen bilden. Erfindungsgemäß ist vorgesehen, dass das faserverstärkte Kunststoffbauteil zusätzlich zu dem Bauteilkunststoffkörper mindestens einen Gegenkörper aufweist, der ausgebildet ist, die offene Seite des mindestens einen Freiraums zu verschließen. Der Gegenkörper weist eine zu dem Bauteilkunststoffkörper zumindest abschnittsweise im Bereich des mindestens einen Freiraums komplementäre Form auf. Der bzw. die Gegenkörper und der Bauteilkunststoffkörper bilden zusammen das faserverstärkte Kunststoffbauteil. Die Verstärkungsfaserstäbe erstrecken sich in den durch die Körperelemente eingeschlossenen Vertiefungen und versteifen das Kunststoffbauteil.

Zudem werden die Verstärkungsfaserstäbe durch den Gegenkörper in den jeweiligen Freiraum gepresst. Insbesondere wird vorgesehen, dass die Verstärkungsfaserstäbe stoffschlüssig mit dem Bauteilkunststoffkörper verbunden sind. Dies ist beispielsweise durch Erhitzen der Verstärkungsfaserstäbe oder des Bauteilkunststoffkörpers gemäß der nachstehend beschriebenen Fertigungsverfahren realisierbar.

Zur Verstärkung des faserverstärkten Kunststoffbauteils über einen vergrößerten Flächenbereich ist in dem Bauteilkunststoffkörper eine Vielzahl von Freiräumen vorgesehen, die sich jeweils in einer parallelen Richtung erstrecken. Dabei ist in der Vielzahl der Freiräume jeweils ein Verstärkungsfaserstab eingelegt. Über die entsprechende Ausbildung kann insbesondere in eine vorbestimmte Lastrichtung eine vorteilhafte Verstärkung erzielt werden. Zudem ist vorsehbar, die Freiräume und eingelegten Faserstäbe zwar parallel verlaufend, jedoch räumlich in die beiden anderen Richtung beabstandet auszurichten. Das bedeutet, dass die Verstärkungsfaserstäbe innerhalb des Kunststoffbauteils im Raum in zwei senkrecht zueinander stehenden Ebenen voneinander beabstandet verlaufen. Zudem können die offenen Seiten der Freiräume in gegenüberliegende Richtungen zeigen.

Erfindungsgemäß ist das faserverstärkte Kunststoffbauteil dadurch gekennzeichnet, dass in dem Bauteilkunststoffkörper eine Vielzahl von Freiräumen vorgesehen ist, die eine Fachwerkstruktur bilden, und in der Vielzahl der Freiräume jeweils ein Verstärkungsfaserstab eingelegt ist. Die Fachwerkstruktur mit Verstärkungsstäben dient einer multidirektionalen Versteifung.

Die Erfindung umfasst auch ein Verfahren zum Herstellen des vorstehend beschriebenen faserverstärkten Kunststoffbauteils, wobei der mindestens eine Verstärkungsfaserstab an dem Bauteilkunststoffkörper befestigt wird, indem eine Oberfläche des Bauteilkunststoffkörpers im Bereich des mindestens einen Freiraums in einen Bereich der Schmelztemperatur des Bauteilkunststoffkörpers erhitzt und der mindestens eine Verstärkungsfaserstab auf die erhitzte Oberfläche gelegt wird, so dass sich der mindestens eine Faserstab mit dem Bauteilkunststoffkörper verschweißt.

In einer alternativen Ausführungsvariante des Verfahrens ist vorgesehen, dass der mindestens eine Verstärkungsfaserstab an dem Bauteilkunststoffkörper befestigt wird, indem der mindestens eine Verstärkungsfaserstab auf eine Schmelztemperatur des Bauteilkunststoffkörpers erhitzt und der mindestens eine erhitzte Verstärkungsfaserstab in den mindestens einen Freiraum des Bauteilkunststoffkörpers eingelegt wird, so dass sich der mindestens eine Verstärkungsfaserstab mit dem Bauteilkunststoffkörper verschweißt.

Mit beiden Verfahren ist die stoffschlüssige Verbindung zwischen den Verstärkungsfaserstäben in den Freiräumen des Bauteilkunststoffkörpers erzielbar. Das Erhitzen der Oberfläche oder des Verstärkungsfaserstabs kann beispielsweise über einen Laser, Infrarotbestrahlung oder Warmluftzufuhr realisiert werden.

In einer Weiterbildung der Verfahren wird zumindest der Prozess des Einlegens der Verstärkungsfaserstäbe automatisiert, vorzugsweise dadurch, dass die Verstärkungsfaserstäbe robotergeführt in die Freiräume eingelegt und darin befestigt werden. Auch das Verpressen und/oder Aufbringen des vorstehend beschriebenen Gegenkörpers, beispielsweise als eine Art Deckel, können robotergestützt erfolgen. Hierdurch wird die Fertigungsdauer deutlich verkürzt.

Andere vorteilhafte Weiterbildungen der Erfindung sind in den Unteransprüchen gekennzeichnet bzw. werden nachstehend zusammen mit der Beschreibung einer Ausführung der Erfindung anhand der Figuren näher dargestellt. Es zeigt:

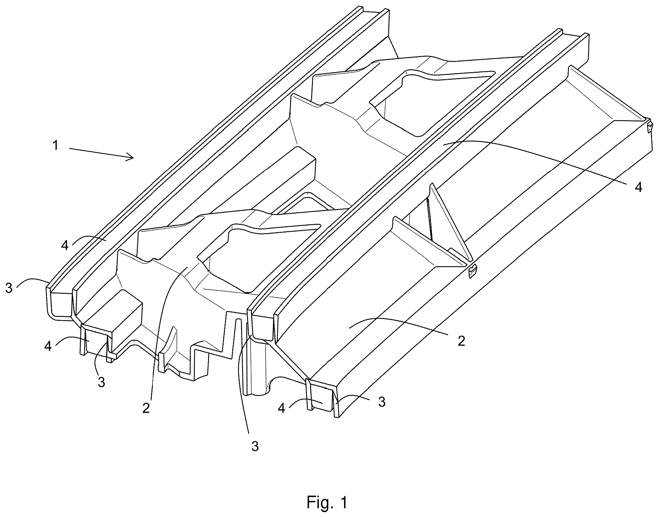

- Fig. 1: eine perspektivische Darstellung eines Bauteilkunststoffkörpers mit Verstärkungsfaserstäben für ein faserverstärktes Kunststoffbauteil.

In Figur 1 ist ein dreidimensionaler Bauteilkunststoffkörper 1 eines faserverstärkten Kunststoffbauteils in einer perspektivischen Ansicht dargestellt. Der Bauteilkunststoffkörper 1 bildet mithin einen Teil der Form des Kunststoffbauteils.

Der Bauteilkunststoffkörper 1 ist im 3D-Druckverfahren hergestellt und weist eine Vielzahl von sich parallel erstreckenden und als wannenförmige Vertiefung 3 ausgebildete Freiräume auf. Die wannenförmigen Vertiefungen 3 sind jeweils nach einer Seite offen, wobei die offene Seite in Breitenrichtung abwechselnd in eine erste und eine zweite Axialrichtung zeigt. Sowohl die Vertiefungen 3 als auch die darin eingelegten Verstärkungsfaserstäbe 4 verlaufen in eine Längsrichtung parallel, sind jedoch sowohl in Breitenrichtung als auch in Axialrichtung räumlich abwechselnd räumlich beabstandet.

Der Bauteilkunststoffkörper 1 weist eine Vielzahl von Strukturelementen 2 auf, welche die Vertiefungen 3 verbinden und selbst wesentliche Teile des Bauteilkunststoffkörpers 1 bilden. Die Vertiefungen 3 sind herstellungsverfahrensbedingt einteilig an dem Bauteilkunststoffkörper 1 ausgebildet. In jede Vertiefung 3 ist ein Verstärkungsfaserstab 4 eingelegt. Die Verstärkungsfaserstäbe 4 sind mit einer Kunststoffmatrix durchsetzt. Sie weisen im Wesentlichen die Querschnittsform der Vertiefungen 3 auf und füllen diese räumlich bis auf einen kleinen Randabstand von weniger als 10% der Querschnittsfläche der Vertiefung zur jeweils offenen Seite aus. Das heißt auch, dass die Verstärkungsfaserstäbe 4 sich über die gesamte Länge der Vertiefungen 3 erstrecken. Durch eines der vorstehend beschriebenen Verfahren werden die Verstärkungsstäbe 4 stoffschlüssig in den Vertiefungen 3 befestigt. In Figur 1 ist auf die Darstellung eines Gegenkörpers verzichtet, dieser könnte jedoch ohne Weiteres ergänzt werden, um zusammen mit dem Bauteilkunststoffkörper 1 das faserverstärkte Kunststoffbauteil zu bilden. Auch können auf beiden Axialseiten Gegenkörper angeordnet und durch diese die Vertiefungen 3 verschlossen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise müssen sich die Verstärkungsfaserstäbe nicht gerade erstrecken, sondern können entsprechend gebogener Freiraumgestaltungen im Bauteilkunststoffkörper verlaufen.

## Patentansprüche

1. Faserverstärktes Kunststoffbauteil umfassend Verstärkungsfaserstäbe (4) und einen dreidimensionalen Bauteilkunststoffkörper (1), der zumindest Teile einer Form des Kunststoffbauteils bestimmt, wobei der Bauteilkunststoffkörper (1) eine Vielzahl von nach zumindest einer Seite offenen Freiräumen aufweist, welche durch wannenförmige oder nutenförmige Vertiefungen (3) gebildet sind und in denen jeweils ein Verstärkungsfaserstab (4) über deren gesamte Länge eingelegt ist, wobei die Vielzahl von Freiräumen eine Fachwerkstruktur bilden,
**dadurch gekennzeichnet, dass** die Verstärkungsfaserstäbe (4) die Querschnittsform der Vertiefungen (3) aufweisen und diese räumlich bis auf einen Randabstand von weniger als 10% der Querschnittsfläche der Vertiefung (3) zur offenen Seite hin ausfüllen,
dass das Kunststoffbauteil zusätzlich zu dem Bauteilkunststoffkörper (1) mindestens einen Gegenkörper aufweist, welcher eine zu dem Bauteilkunststoffkörper (1) zumindest abschnittsweise im Bereich der Freiräume komplementäre Form aufweist und welcher ausgebildet ist, die jeweils offene Seite der Freiräume zu verschließen,
und dass die Verstärkungsfaserstäbe (4) durch den Gegenkörper in den jeweiligen Freiraum gepresst sind.

2. Faserverstärktes Kunststoffbauteil nach Anspruch 1, **dadurch gekennzeichnet, dass** der Bauteilkunststoffkörper (1) in einem generativen bzw. additiven Fertigungsverfahren hergestellt ist.

3. Faserverstärktes Kunststoffbauteil nach zumindest einem der vorigen Ansprüche, **dadurch gekennzeichnet, dass** die Verstärkungsfaserstäbe (4) den jeweiligen Freiraum ausfüllen.

4. Faserverstärktes Kunststoffbauteil nach zumindest einem der vorigen Ansprüche, **dadurch gekennzeichnet, dass** die Verstärkungsfaserstäbe (4) stoffschlüssig mit dem Bauteilkunststoffkörper (1) verbunden sind.

5. Faserverstärktes Kunststoffbauteil nach zumindest einem der vorigen Ansprüche, **dadurch gekennzeichnet, dass** Freiräume der Vielzahl von Freiräumen sich jeweils in einer parallelen Richtung erstrecken.

6. Verfahren zum Herstellen des faserverstärktes Kunststoffbauteils nach zumindest einem der vorigen Ansprüche, **dadurch gekennzeichnet, dass** ein jeweiliger Verstärkungsfaserstab (4) an dem Bauteilkunststoffkörper (1) befestigt wird, indem eine Oberfläche des Bauteilkunststoffkörpers (1) im Bereich eines Freiraums der Vielzahl von Freiräumen in einen Bereich der Schmelztemperatur des Bauteilkunststoffkörpers (1) erhitzt wird und der jeweilige Verstärkungsfaserstab (4) auf die erhitzte Oberfläche gelegt wird, so dass sich der jeweilige Verstärkungsfaserstab (4) mit dem Bauteilkunststoffkörper (1) verschweißt.

7. Verfahren zum Herstellen des faserverstärktes Kunststoffbauteils nach zumindest einem der vorigen Ansprüche, **dadurch gekennzeichnet**, die Verstärkungsfaserstäbe (4) an dem Bauteilkunststoffkörper (1) befestigt werden, indem die Verstärkungsfaserstäbe (4) auf eine Schmelztemperatur des Bauteilkunststoffkörpers (1) erhitzt und die erhitzte Verstärkungsfaserstäbe (4) in den jeweiligen Freiraum des Bauteilkunststoffkörpers (1) eingelegt werden, so dass sich die Verstärkungsfaserstäbe (4) mit dem Bauteilkunststoffkörper verschweißen.

8. Verfahren nach einem der beiden vorigen Ansprüche, **dadurch gekennzeichnet, dass** die Verstärkungsfaserstäbe (4) robotergeführt in den jeweiligen Freiraum eingelegt werden.

## Claims

1. Fibre-reinforced plastic component comprising reinforcement fibre rods (4) and a three-dimensional component plastic member (1) which determines at least parts of a shape of the plastic component, wherein the component plastic member (1) has a multiplicity of voids which are open towards at least one side and which are formed by tub-shaped or groove-shaped depressions (3) and in which is placed, over the entire length thereof, in each case one reinforcement fibre rod (4), wherein the multiplicity of voids form a lattice structure,
**characterized in that** the reinforcement fibre rods (4) have the cross-sectional shape of the depressions (3) and in spatial terms fill the latter with the exception of a peripheral spacing of less than 10% of the cross-sectional area of the depression (3) towards the open side,
**in that** the plastic component in addition to the component plastic member (1) has at least one mating member which, at least in portions in the region of the voids, has a shape that is complementary to the component plastic member (1) and which is configured for closing the respectively open side of the voids,
and **in that** the reinforcement fibre rods (4) are pressed into the respective void by the mating member.

2. Fibre-reinforced plastic component according to Claim 1, **characterized in that** the component plastic member (1) is produced in a generative or additive manufacturing method, respectively.

3. Fibre-reinforced plastic component according to at least one of the preceding claims, **characterized in that** the reinforcement fibre rods (4) fill the respective void.

4. Fibre-reinforced plastic component according to at least one of the preceding claims, **characterized in that** the reinforcement fibre rods (4) are connected to the component plastic member (1) in a materially integral manner.

5. Fibre-reinforced plastic component according to at least one of the preceding claims, **characterized in that** voids of the multiplicity of voids extend in each case in a parallel direction.

6. Method for producing the fibre-reinforced plastic component according to at least one of the preceding claims, **characterized in that** a respective reinforcement fibre rod (4) is fastened to the component plastic member (1) **in that** a surface of the component plastic member (1) in the region of a void of the multiplicity of voids is heated in a range of the melting temperature of the component plastic member (1), and the respective reinforcement fibre rod (4) is placed onto the heated surface so that the respective reinforcement fibre rod (4) is welded to the component plastic member (1).

7. Method for producing the fibre-reinforced plastic component according to at least one of the preceding claims, **characterized in that** the reinforcement fibre rods (4) are fastened to the component plastic member (1) in that the reinforcement fibre rods (4) are heated to a melting temperature of the component plastic member (1), and the heated reinforcement fibre rods (4) are placed into the respective void of the component plastic member (1) so that the reinforcement fibre rods (4) are welded to the component plastic member.

8. Method according to one of the two preceding claims, **characterized in that** the reinforcement fibre rods (4) are placed into the respective void so as to be guided by a robot.

## Revendications

1. Composant en matière plastique renforcé par des fibres, comprenant des tiges de fibres de renforcement (4) et un corps en matière plastique de composant tridimensionnel (1), qui détermine au moins des parties d'une forme du composant en matière plastique, le corps en matière plastique de composant (1) présentant une pluralité d'espaces libres ouverts vers au moins un côté, qui sont formés par des renfoncements (3) en forme de cuvette ou en forme de rainure et dans chacun desquels une tige de fibre de renforcement (4) est insérée sur toute leur longueur, la pluralité d'espaces libres formant une structure en treillis,
**caractérisé en ce que** les tiges de fibres de renforcement (4) présentent la forme en section transversale des renfoncements (3) et les remplissent spatialement à l'exception d'une distance au bord inférieure à 10 % de la surface en section transversale du renfoncement (3) vers le côté ouvert,
**en ce que** le composant en matière plastique présente, en plus du corps en matière plastique de composant (1), au moins un corps antagoniste qui présente une forme complémentaire au corps en matière plastique de composant (1) au moins par sections dans la zone des espaces libres et qui est configuré pour fermer le côté respectivement ouvert des espaces libres,
et **en ce que** les tiges de fibres de renforcement (4) sont pressées par le corps antagoniste dans l'espace libre respectif.

2. Composant en matière plastique renforcé par des fibres selon la revendication 1, **caractérisé en ce que** le corps en matière plastique de composant (1) est fabriqué dans un procédé de fabrication générative ou additive.

3. Composant en matière plastique renforcé par des fibres selon au moins l'une quelconque des revendications précédentes, **caractérisé en ce que** les tiges de fibres de renforcement (4) remplissent l'espace libre respectif.

4. Composant en matière plastique renforcé par des fibres selon au moins l'une quelconque des revendications précédentes, **caractérisé en ce que** les tiges de fibres de renforcement (4) sont reliées au corps en matière plastique de composant (1) par une liaison de matière.

5. Composant en matière plastique renforcé par des fibres selon au moins l'une quelconque des revendications précédentes, **caractérisé en ce que** les espaces libres de la pluralité d'espaces libres s'étendent chacun dans une direction parallèle.

6. Procédé de fabrication du composant en matière plastique renforcé par des fibres selon au moins l'une quelconque des revendications précédentes, **caractérisé en ce qu'**une tige de fibre de renforcement respective (4) est fixée au corps en matière plastique de composant (1) en chauffant une surface du corps en matière plastique de composant (1) dans la zone d'un espace libre de la pluralité d'espaces libres dans une zone de la température de fusion du corps en matière plastique de composant (1) et en plaçant la tige de fibre de renforcement respective (4) sur la surface chauffée, de telle sorte que la tige de fibre de renforcement respective (4) se soude au corps en matière plastique de composant (1).

7. Procédé de fabrication du composant en matière plastique renforcé par des fibres selon au moins l'une quelconque des revendications précédentes, **caractérisé en ce que** les tiges de fibres de renforcement (4) sont fixées au corps en matière plastique de composant (1) en chauffant les tiges de fibres de renforcement (4) à une température de fusion du corps en matière plastique de composant (1) et en insérant les tiges de fibres de renforcement (4) chauffées dans l'espace libre respectif du corps en matière plastique de composant (1), de telle sorte que les tiges de fibres de renforcement (4) se soudent au corps en matière plastique de composant.

8. Procédé selon l'une quelconque des deux revendications précédentes, **caractérisé en ce que** les tiges de fibres de renforcement (4) sont insérées dans l'espace libre respectif de manière robotisée.
